# EUROPEAN PATENT SPECIFICATION

(11) **EP 3 166 255 B1**
(45) Date of publication and mention of the grant of the patent: **26.09.2018**
(21) Application number: 15192688.8
(22) Date of filing: 03.11.2015
(51) Int. Cl.: H04L 12/40, H04L 12/46, H04L 12/417, H04L 12/863, H04L 12/815, H04L 12/823

(54) **SWITCHING OF SCHEDULED FRAMES IN AN ETHERNET-BASED IN-VEHICLE NETWORK**
SCHALTEN VON TERMINIERTEN RAHMEN IN EINEM ETHERNET-BASIERTEN NETZWERK IN EINEM FAHRZEUG
COMMUTATION DE TRAMES ORDONNANCÉES DANS UN RÉSEAU EMBARQUÉ ETHERNET

(43) Date of publication of application: 10.05.2017
(73) Proprietor: ROBERT BOSCH GMBH, 70442 Stuttgart (DE)
(72) Inventor: Diarra, Aboubacar, 71706 Markgroeningen (DE)

(56) References cited:
- EP-A1- 1 657 888
- DON PANNELL: "Audio Video Bridging g g Gen 2 Assumptions IEEE 802 1 AVB Plenary IEEE 802.1 AVB Plenary Nov 2012 -- San Antonio, TX ; avb-pannell-gen2-assumptions-", IEEE DRAFT; AVB-PANNELL-GEN2-ASSUMPTIONS-1112-V12, IEEE-SA, PISCATAWAY, NJ USA, vol. 802.1, no. v12, 14 November 2012 (2012-11-14), pages 1-61, XP068045918, [retrieved on 2012-11-15]
- CHRISTIAN BOIGER: "Time Aware Shaper - Flush Queue Event ; bv-boiger-TAS-flush-queue-0313", IEEE DRAFT; BV-BOIGER-TAS-FLUSH-QUEUE-0313, IEEE-SA, PISCATAWAY, NJ USA, vol. 802.1, 20 March 2013 (2013-03-20), pages 1-9, XP068051715, [retrieved on 2013-03-20]

## Description

### Field of invention

The invention relates to the switching of incoming scheduled frames in an Ethernet-based in-vehicle network, wherein the network provides time aware traffic shaping (TAS) and comprises at least one bridge configured for transmitting TAS-based frames.

### Prior Art

The need for achieving ultra-low latency and jitter data transmission in in-vehicle networks has motivated the development of an Ethernet-based time aware shaper (IEEE 802.1 Qbv) that is currently being defined by the IEEE 802.1 working group. Another motivation for this development is the need to predict the timing behavior of in-vehicle time and safety critical networks.

One goal of the time aware shaper (TAS) is to realize a deterministic scheduling of the traffic from queues in bridges/switches. Without TAS, any high priority traffic has to wait in a queue memory to be scheduled until the currently scheduled frame on an egress port has been transmitted. This introduces additional variable latency which is not acceptable in case of time sensitive streams (scheduled traffic) e.g. in industrial and automotive networks, where deterministic latency is a constraint. TAS requires a schedule mechanism for each of the queues on every egress port which means, that each bridge/switch has to be aware of the time at which scheduled traffic is expected to arrive so that lower priority traffic is blocked from transmission in this particular time window or time slot.

This is in order to ensure that scheduled traffic is forwarded from sender to receiver through all the network nodes with a deterministic delay. In order to protect the scheduled traffic from interfering with the non-scheduled traffic that might have just started transmission, a guard band may be required such that the transmission from all queues is blocked just before the start of the transmission of scheduled traffic. The size of the guard band is dependent on the maximum possible size of interfering frames.

One of the major characteristics of TAS is its guaranteed end-to-end latency and jitter. However, whenever a part of the network, e.g. a bridge or a sending device does not function properly, the latency and jitter might not be guaranteed. In particular, when a scheduled frame is sent later than expected, this might result in a situation, where the following scheduled frames do also arrive later than expected. Moreover, the overall error may increase if subsequent frames are sent to late. These problems may arise for example if there is a dysfunction of the time synchronization software stack running on a scheduled frame sending device. Even a reset of the time synchronization software may cause these effects.

DON PANNELL "Audio Video Bridging Gen 2 Assumptions IEEE 802 1 AVB Plenary IEEE 802.1 14. November 2012, pages 1-61 discloses general aspects of TAS: receiving of a frame in transmission windows; holding, forwarding or dropping of frames that are received outside of the transmission window.

CHRISTIAN BOIGER "Time Aware Shaper Flush Queue Event" 20. March 2013 discloses a type of event that can make bridges aware of the time when the scheduled traffic queue should be empty.

The method and the devises of the independent claims define solutions to this problem. In particular the benefit of the invention is to improve the delivery of time-and-safety critical packets demanding ultra-low latency and jitter. It thus improves the reliability and safety in in-vehicle time-and-safety critical networks.

According to one aspect of the invention, an ingress policing concept is defined e.g. for switches located in bridges in an Ethernet-based network in order to avoid any considerable unexpected delay that otherwise would increase end-two-end latency and jitter of critical scheduled frames in an unacceptable way. Basically, the solution consists of detecting a scheduling dysfunction with respect to time aware shaper in a node and dropping any scheduled frame transmitted at the wrong point in time, thus protecting other scheduled frames transmitted at correct times from unexpected delay. Embodiments of the present invention are illustrated by way of example and not limitation in the figures of accompanying drawings in which like references indicate similar elements and in which:
- Figure 1: shows an overview of the queuing model in a device supporting time aware shaper;
- Figure 2: shows an example of the handling of scheduled frames in an Ethernet-based in-vehicle network;
- Figure 3: shows an example of the effect caused by a time aware shaper that is located in an end device which does not work properly;
- Figure 4: gives an overview of some basic concepts of the invention;
- Figure 5: shows the effect of the suggested invention on the handling of scheduled frames that originate from a device that does not work properly;
- Figure 6: gives an overview of some elements of a switch that is located in a bridge and is configured to execute the invention; and
- Figure 7: is a flow chart showing some steps of an embodiment of the inventive method.

In the following description numerous specific details are introduced to provide a thorough understanding of, and enabling the description for embodiments of the present invention. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

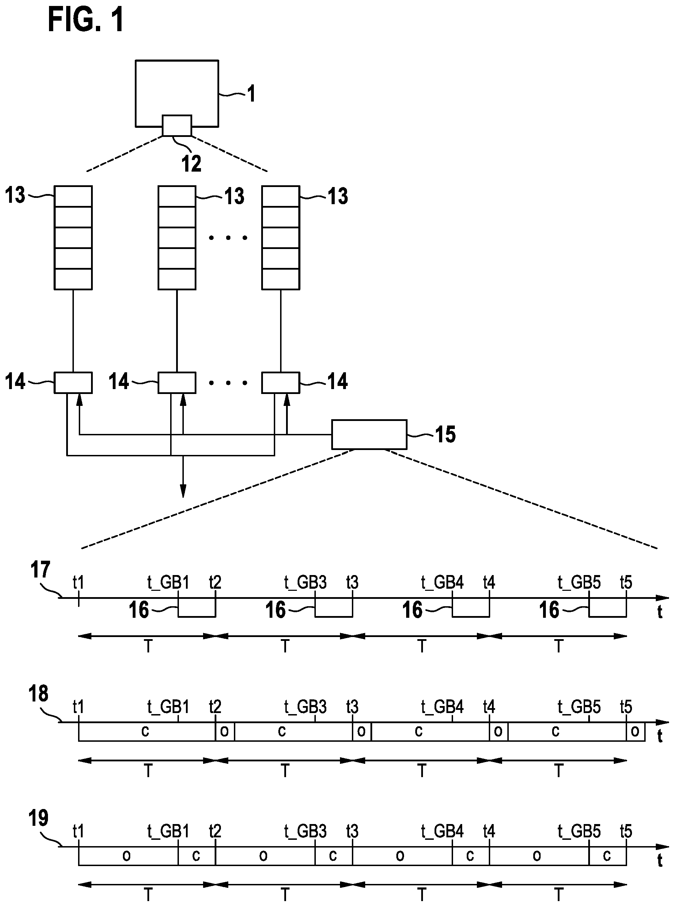

Figure 1 shows the frame queuing mechanism at the egress or output port 12 of a device 1 supporting TAS. A maximum of eight queues 13 are allowed at the output port 12 according to IEEE 802.1 Q standard on which time aware shaper is based.

Actually, the frame transmission mode in switched Ethernet devices is collision free. However, the transmission of a packet can suffer from some non-deterministic delays due to interference at the output port 12. Interference occurs when a packet or frame is ready for transmission, but cannot be transmitted because another frame is being transmitted on the same link. This situation can increase end-to-end latency because of unpredictable delays. For some critical packets requiring ultra-low latency and jitter, interferences have to be avoided. This is one goal of TAS.

As shown in figure 1, each scheduled frames queue 13 has a gate 14 that can be opened and closed and thus determines whether a frame has to be transmitted or not. The gate 14 is controlled by a gate driver 15. The transmission of the scheduled frames is performed periodically at a frequency of 1/T. When the gate is open for a scheduled frame, the output port has to be free in order to avoid interference susceptible to delay the transmission. This is guaranteed by a guard band that is based on the frequency of 1/T.

Generally speaking, at the beginning of a guard band 16 at time t_GBi in a given cycle i, all gates 14 are closed. After a time interval, e.g. t2-t_{GB1} which is the time interval corresponding to the transmission delay of the longest frame handled by the device 1, the appropriate scheduled frames queue gate 14 is opened to allow transmission of TAS-based frames. In this case, when the transmission of a non-scheduled frame starts before t_GBi, the transmission of this frame will be completed before t2, thus avoiding interference on scheduled frames.

After the scheduled frame has been completely sent, the corresponding gate 14 is closed and other gates 14 are opened. This scenario is then repeated in subsequent cycles, e.g. t3, t4, t5, .... In order to guarantee zero interference during the delivery of a frame from an end device 1 to another end device across a network of multiple hops, each node sending and forwarding this frame has to run TAS.

Figure 1 further shows a time line 17 with guard bands 16. Based on timeline 18 the gate state for a first scheduled queue and based on timeline 19 the gate state of another scheduled queue is shown. In both gate state diagrams, the letter '*c*' denotes a closed gate and the letter '*o*' denotes an open gate. It can be seen from these diagrams that at each guard band 16 all gates 14 are closed for transmission.

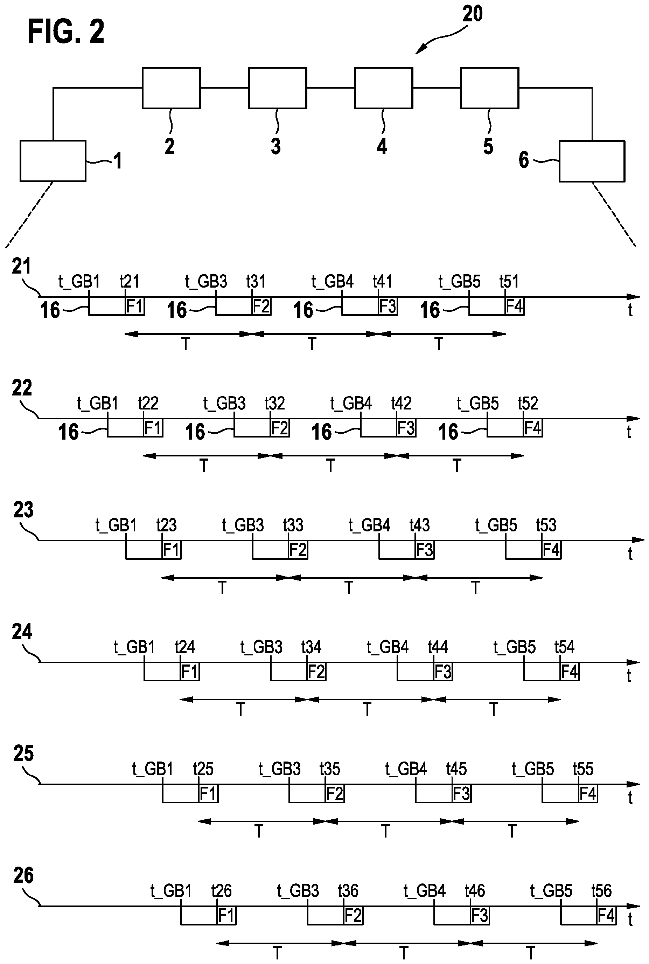

Figure 2 shows the transmission of frames F1, F2, F3, and F4 based on TAS in a network comprising two end devices 1, 6 and four bridges 2, 3, 4, 5. Figure 2 further shows time line 21 that corresponds to device 1 and time lines 22 to 25 that correspond to bridges 2 to 5, respectively. Time line 26 corresponds to device 6.

As can be seen from time line 21, device 1 sends a first scheduled frame F1 at time t21. Time line 22 shows that a guard band 16 is provided by bridge 2 that controls the forwarding of frame F1 at time t22. In the same way, bridges 3, 4 and 5 set up their guard bands 23, 24, 25 to prevent interference while transmitting frame F1 until it is received at device 6. After the second guard band 16, device 1 sends the second frame F2 which will be transmitted via bridges 2, 3, 4, 5 to device 6. The same process is then repeated for scheduled frames F3 and F4.

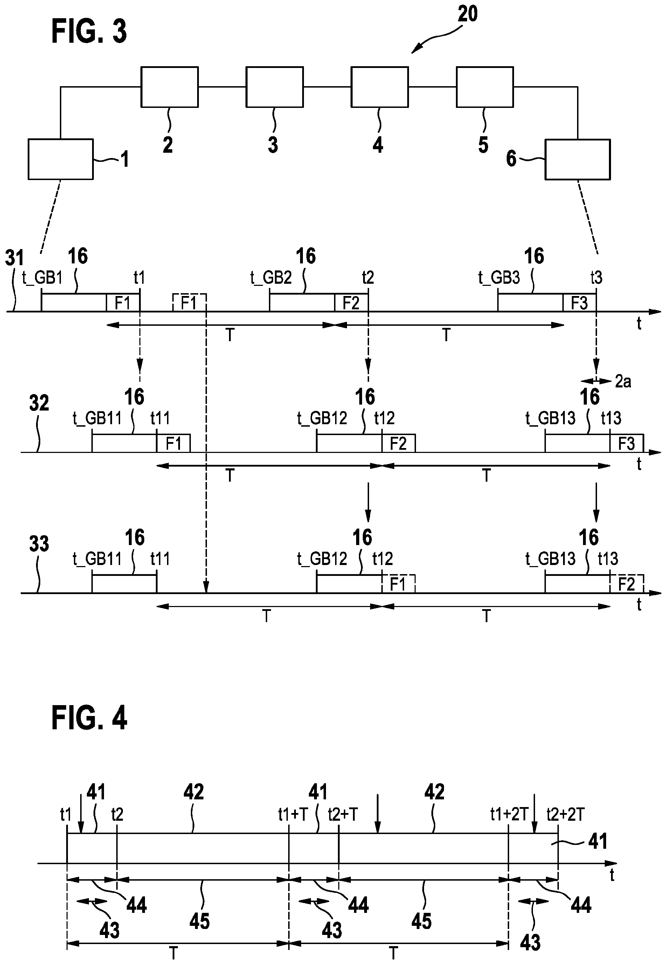

Figure 3 shows a situation where device 1 transmits a scheduled frame F1 later than expected (timeline 31). Frame F1 is also illustrated in dashed lines in order to show the actual time of transmission in contrast to the planned schedule time which is expected to be finished at time t1. This means, that unexpected delay is added to the end-two-end latency of that frame F1 and also of other scheduled frames F2, F3, although these frames F2, F3 are transmitted at the planned point of time.

Timeline 32 shows the situation assuming that no fault in device 1 had occurred, which means that all frames F1, F2, F3 arrive at the right time and can thus be transmitted according to the internal guard band 16.

Timeline 33 shows a situation where frame F1 arrives too late. This problem can be caused by any issue in the functioning of the hardware or software of device 1. An example causing such a problem might be a malfunctioning synchronization software stack of device 1. As shown in figure 3, frame F1 arrives at the input port or ingress port of bridge 1 later than the expected time t1, which is its scheduled arrival time. As a consequence, when frame F1 arrives at the output port of bridge 2 the gate is already closed for scheduled traffic. So, frame F1 has to wait until the next cycle, which originally was reserved for the forwarding of frame F2. This situation might occur for example because of a reset of the time synchronization software stack of device 1, which in turn may be caused by a bad synchronization of the reference clock of device 1. In this example, the internal clock of device 1 might be adjusted to the reference clock before frame F2 has to be transmitted. This means that frame F2 might be transmitted at the right time. However, since F2 arrives at the output queue of bridge 2 while frame F1 is still waiting for transmission, frame F2 has to wait until frame F1 is transmitted. This problem is in particular evident if only one scheduled frame may be transmitted within any transmission cycle. But even if this is not the case, frame F2 will still be forwarded after frame F1, which results in a delay of the scheduled forwarding time.
In the example shown in figure 3, frame F2 is transmitted at time t13, which was originally reserved for the transmission of frame F3 (timeline 33). It is obvious that such a situation is not tolerable for time-and-safety critical automotive applications that require ultra-low latency and jitter. Unfortunately, there is no standard related to TAS that addresses this problem or gives a solution thereto.

The solution shown here will be described on the basis of a so-called dropping window and an arrival window. However, both terms are merely used to show the basic concept, which means that there is at least one time interval defined for deciding whether an incoming frame should be dropped or transmitted.

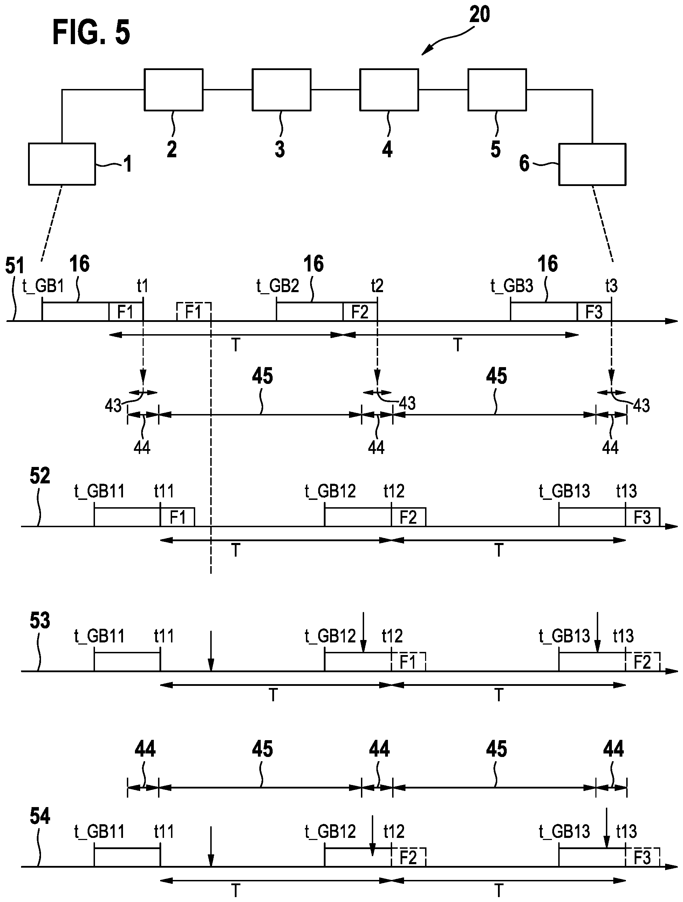

The quality of a current synchronization has an effect of the jitter of time aware shaper. The synchronization error between different nodes is responsible for this jitter in the performance of TAS. In critical applications, a specific synchronization error threshold may not be exceeded. This maximum admissible error depends on the application. In order to describe the principle of the invention, it is assumed that the maximum admissible synchronization accuracy is defined as +/- α, representing a maximum time deviation between the clock of a device and the reference clock of the network. From this follows, that the maximum admissible clock deviation between two devices in the network is 2α. This is denoted in figure 5 with reference sign 55 with respect to frame F1. Of course, the same holds for frames F2 and F3.

Based on these assumptions, it is suggested to define arrival windows 41 and dropping windows 42, as illustrated in figure 4. Advantageously, the arrival window is somewhat larger than 2α, in particular it might be defined to be 2α + *margin,* where *margin* is a value greater than 0 in the example shown in figure 4. Of course, *margin* could also be a value that equals 0. In the example shown in figure 4, the time interval 2α + *margin* is illustrated by arrows 43. The time interval of arrival window 41 is illustrated by arrow 44 and the time interval of dropping window 42 is indicated by arrow 45. Also shown in figure 4 is the duration *T* of each cycle.

In figure 5, an ideal case is shown based on timeline 52. In this case each of scheduled frames F1, F2, F3 arrives at the expected time t1, t2, t3 and is forwarded at time t11, t12, t13, respectively. However, in case of a synchronization error between device 1 and bridge 2, a scheduled frame F1, F2, F3 might arrive either before or after the expected arrival time at bridge 2. Since the difference between the expected arrival time and the actual arrival time is at least 2α, the maximum time interval between the arrival of two consecutive scheduled frames F1, F2, F3 is at least equal to T-2α and has a maximum value T+2α. The same observation holds for any two directly linked nodes or bridges 2, 3, 4, 5 handling scheduled frames F1, F2, F3.

Timeline 53 shows a similar situation as timeline 33 illustrated in figure 3. However, timeline 54 shows what happens if bridge 1 is configured to make use of an arrival window 41 (illustrated as time interval 44) and a dropping window 42 (illustrated as time interval 45).

It can be summarized that the suggested ingress policy comprises setting up a time window called dropping window 42, wherein all scheduled frames F1, F2, F3 received from device 1 within this time interval 45 will be dropped. Another time window called arrival window 44 is defined to be a time interval 44 wherein all scheduled frames F1, F2, F3 that arrive within this time interval 44 will be accepted and forwarded by the receiving device, for example bridge 2. This mechanism is intended to be implemented in bridges comprising switches that are responsible for queuing and forwarding of network traffic.

Whenever a scheduled frame F1, F2, F3 arrives at the input port of bridge 2 a subsequent scheduled frame F2, F3 may arrive at the earliest after T-2α and at the latest at T+2α. Therefore, the interval 44 of the arrival window 41 is preferably set to 2α+*margin* and the time interval 45 of the dropping window 42 is preferably set to T-2α-*margin.* Of course, *margin* can be equal to 0. Switches and bridges configured according to these dropping windows 42 and arrival windows 41 ensure that scheduled frames arriving without dysfunction of TAS will be transmitted as planned since they arrive within arrival window 41. However, if there is a dysfunction of TAS then all frames arriving with delay will be dropped. As shown on timeline 54, arrival window 44 is located within guard band 16.

Advantageously, the described mechanism is executed on all bridges 2, 3, 4, 5 in order to ensure that there is no unexpected non-deterministic delay throughout the whole network.

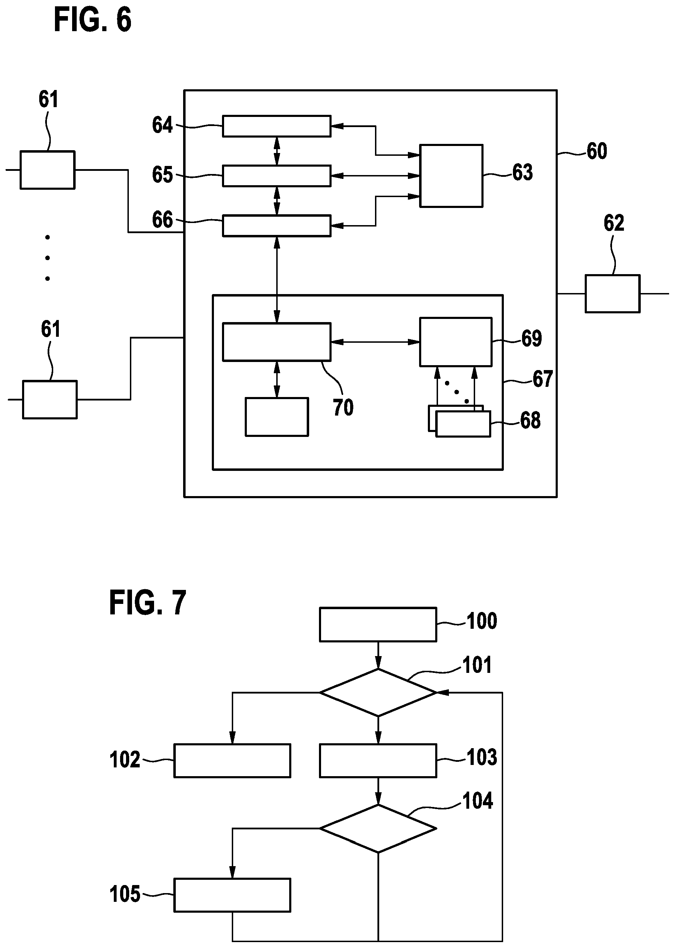

Figure 6 shows an example of a switch 60 that might be realized in any of bridges 2, 3, 4, 5. Switch 60 has input ports 61 and an output port 62. Switch 60 comprises a central processing unit, CPU 63, on which the suggested ingress policing algorithm is executed. CPU 63 is connected with an address bus 64, a control bus 65 and a data bus 66.

A forwarding engine 67 is shown comprising several timers 68, also denoted as pTimer, that control a switch interrupt controller 69. Switch interrupt controller 69 is connected with CPU 63 via a forwarding engine interface 70.

Switch 60 shown in figure 6 might work as follows:
At the end of each arrival window 41 and dropping window 42, an IRQ (Interrupt Request) is sent by the corresponding timer 68 to CPU 63. In this configuration, there is a timer 68 for each input port 61 to set up the time intervals of the arrival windows and dropping windows. The CPU 63 executes an ISR (Interrupt Service Routine) that corresponds to the suggested ingress policing algorithm. The ISR might comprise the following steps:
After having received an IRQ, switch interrupt controller 69 forwards the IRQ to CPU 63 via the forwarding engine interface 70, data bus 66 and control bus 65. In return CPU 63 sends back a so-called interrupt acknowledgement via interface 70. Switch interrupt controller 69 then sends the address to CPU 63 that corresponds to the IRQ currently executed. CPU 63 will then run the ISR that is located at this address.

Figure 7 shows a flow chart comprising some steps of an embodiment of the suggested method. In a step 100 it is assumed that the network starts up. In this step, the expected arrival time t1 of the first scheduled frame F1 in bridge 2 is defined, as well as the end of the arrival window 41, which is t2. A cycle counter is defined and initiated with 0.
In a step 101 it is checked whether a frame arrives within arrival window 41. If this is not the case, then an anomaly is detected in step 102. Otherwise, the received frame is transmitted to output port 62 and forwarded e.g. to bridge 3. Dropping window 42 is subsequent to arrival window 41. In a step 104 it is checked whether a frame arrives during time interval 44 of dropping window 45. If one or more frames have arrived during time interval 44, these frames will be dropped in step 105. Having reached the end of dropping window 42, the method proceeds to step 101 which means that with the beginning of the subsequent arrival window 41 it is checked again, whether a frame arrives within arrival window 41.

Of course, the elements of the embodiment as described above can be combined to provide further embodiments. And although the exemplary embodiments of the method and various components of the network have been illustrated in the accompanied drawings and are described in the forgoing detail description, it will be understood that the invention is not limited to the embodiments disclosed, but comprises numerous rearrangements, modifications and substitutions as set forth and are defined by the following claims. For example, the flow chart shown in figure 7 does of course only roughly describe a real implementation of the suggested method. The same is true for the system shown in figure 6. Nevertheless, a person skilled in the art should be able to fully understand the principle of the present invention and should also be able to implement it.

## Claims

1. Method for switching incoming scheduled frames in an Ethernet-based in-vehicle network (20), wherein the network (20) comprises at least one bridge (2, 3, 4, 5) configured for transmitting time aware traffic shaping,TAS, based frames (F1, F2, F3, F4), **characterized in that** an arrival window (44) for frames (F1, F2, F3, F4) arriving at an ingress port of the at least one bridge (2, 3, 4, 5) is defined to be a time interval (44) wherein all scheduled frames (F1, F2, F3) that arrive within this time interval (44) at the ingress port of the at least one bridge (2, 3, 4, 5) will be accepted and forwarded by the at least one bridge (2, 3, 4, 5), and wherein a dropping window (42) is defined to be a time interval (45) wherein all scheduled frames (F1, F2, F3) received at the ingress port of the at least one bridge (2, 3, 4, 5) within this time interval (45) will be dropped, wherein the method comprises at least the following steps:
- checking by the at least one bridge (2, 3, 4, 5), whether an incoming scheduled frame (F1, F2, F3, F4) arrives at the ingress port of the at least one bridge (2, 3, 4, 5) within the dropping window (42) or the arrival window (44);
- dropping the frame (F1, F2, F3, F4) if it has arrived at the ingress port of the at least one bridge (2, 3, 4, 5) within the dropping window (42); and
- forwarding the frame (F1, F2, F3, F4) if it has arrived at the ingress port of the at least one bridge (2, 3, 4, 5) within the arrival window (44).

2. Method of claim 1, wherein the at least one bridge (2, 3, 4, 5) use a guard band (16) for determining the point in time at which a TAS-based frame (F1, F2, F3, F4) has to be sent or transmitted, **characterized in that** the dropping window (42) and/or an arrival window (41) is defined with respect to the guard band (16).

3. Method of claim 2, wherein a maximum deviation between the time of an internal clock of a device (1) and a reference time within the network (20) is +/- α, **characterized in that** the length of time interval (45) of the dropping window (42) is smaller than
*T - 2α,* with *1*/*T* being the frequency of the guard band (16).

4. Method of claim 2 or 3, wherein a maximum deviation between the time of an internal clock of a device (1) and a reference time within the network (20) is +/- α, **characterized in that** frames (F1, F2, F3, F4) arriving within an arrival window (41) are further transmitted, wherein the length of the time interval (44) of the arrival window (41) is equal or greater than
*2α,* with *1*/*T* being the frequency of the guard band (16).

5. Method of claim 2 or 4, wherein a maximum deviation between the time of an internal clock of a device (1) and a reference time within the network (20) is +/- α, **characterized in that** the length of the dropping window (42) is *T - 2α - margin,*
and/or the length of the arrival window (41) is
*2α* + *margin,* with *margin* being a value greater or equal to zero.

6. Method of anyone of the previous claims, **characterized in that** the beginning of the dropping window (42) and/or the end of the dropping window (42) and/or the beginning of the arrival window (41) and/or the end of the arrival window (41) is determined using a timer (68).

7. Method of claim 6, characterized that a separate timer (68) is defined for each port of a bridge (2, 3, 4, 5).

8. Switch (60) within a bridge (2, 3, 4, 5) in an Ethernet-based in-vehicle network (20), wherein the bridge (2, 3, 4, 5) is configured for transmitting TAS-based frames (F1, F2, F3, F4), **characterized in that** the switch comprises means for executing a method according to anyone of claims 1 to 7.

9. Bridge (2, 3, 4, 5) in an Ethernet-based in-vehicle network (20), wherein the bridge (2, 3, 4, 5) is configured for transmitting TAS-based frames (F1, F2, F3, F4), **characterized in that** the bridge comprises a switch (60) configured according to claim 8.

10. Ethernet-based in-vehicle network (20), wherein the network (20) comprises at least one bridge (2, 3, 4, 5) that is configured according to claim 9.

11. A computer readable medium comprising computer executable instructions for performing the method of anyone of claims 1 to 7.

## Patentansprüche

1. Verfahren zum Schalten eingehender terminierter Rahmen in einem Ethernet-basierten Netz (20) in einem Fahrzeug, wobei das Netz (20) mindestens eine Brücke (2, 3, 4, 5) umfasst, die zum Übertragen auf zeitsensitiver Datenverkehrssteuerung (Time Aware Traffic Shaping), TAS, basierender Rahmen (F1, F2, F3, F4) konfiguriert ist, **dadurch gekennzeichnet, dass** ein Eintrefffenster (44) für Rahmen (F1, F2, F3, F4), die an einem Eingangsanschluss der mindestens einen Brücke (2, 3, 4, 5) eintreffen, als ein Zeitintervall (44) definiert wird, wobei alle terminierten Rahmen (F1, F2, F3), die innerhalb dieses Zeitintervalls (44) am Eingangsanschluss der mindestens einen Brücke (2, 3, 4, 5) eintreffen, von der mindestens einen Brücke (2, 3, 4, 5) akzeptiert und weitergeleitet werden, und wobei ein Verwurffenster (42) als ein Zeitintervall (45) definiert wird, wobei alle innerhalb dieses Zeitintervalls (45) am Eingangsanschluss der mindestens einen Brücke (2, 3, 4, 5) empfangenen terminierten Rahmen (F1, F2, F3) verworfen werden, wobei das Verfahren mindestens die folgenden Schritte umfasst:
- Prüfen durch die mindestens eine Brücke (2, 3, 4, 5), ob ein eingehender terminierter Rahmen (F1, F2, F3, F4) am Eingangsanschluss der mindestens einen Brücke (2, 3, 4, 5) innerhalb des Verwurffensters (42) oder des Eintrefffensters (44) eintrifft,
- Verwerfen des Rahmens (F1, F2, F3, F4), falls dieser innerhalb des Verwurffensters (42) am Eingangsanschluss der mindestens einen Brücke (2, 3, 4, 5) eintraf, und
- Weiterleiten des Rahmens (F1, F2, F3, F4), falls dieser innerhalb des Eintrefffensters (44) am Eingangsanschluss der mindestens einen Brücke (2, 3, 4, 5) eintraf.

2. Verfahren nach Anspruch 1, wobei die mindestens eine Brücke (2, 3, 4, 5) zum Bestimmen des Zeitpunkts, zu dem ein TAS-basierter Rahmen (F1, F2, F3, F4) gesendet oder übertragen werden muss, ein Schutzband (16) verwendet, **dadurch gekennzeichnet, dass** das Verwurffenster (42) und/oder ein Eintrefffenster (41) in Bezug auf das Schutzband (16) definiert wird.

3. Verfahren nach Anspruch 2, wobei eine maximale Abweichung zwischen der Zeit einer inneren Uhr einer Einrichtung (1) und einer Referenzzeit innerhalb des Netzes (20) +/- α beträgt, **dadurch gekennzeichnet, dass** die Länge des Zeitintervalls (45) des Verwurffensters (42) geringer ist als
*T* - *2α,* wobei 1/T die Frequenz des Schutzbands (16) ist.

4. Verfahren nach Anspruch 2 oder 3, wobei eine maximale Abweichung zwischen der Zeit einer inneren Uhr einer Einrichtung (1) und einer Referenzzeit innerhalb des Netzes (20) +/- α beträgt, **dadurch gekennzeichnet, dass** innerhalb eines Eintrefffensters (41) eintreffende Rahmen (F1, F2, F3, F4) weiterübertragen werden, wobei die Länge des Zeitintervalls (44) des Eintrefffensters (41) gleich oder größer ist als
*2α*, wobei *1*/*T* die Frequenz des Schutzbands (16) ist.

5. Verfahren nach Anspruch 2 oder 4, wobei eine maximale Abweichung zwischen der Zeit einer inneren Uhr einer Einrichtung (1) und einer Referenzzeit innerhalb des Netzes (20) +/- α beträgt, **dadurch gekennzeichnet, dass** die Länge des Verwurffensters (42)
*T* - *2α* - *Toleranz* beträgt
und/oder die Länge des Eintrefffensters (41) *2α* + *Toleranz* beträgt, wobei *Toleranz* ein Wert größer oder gleich Null ist.

6. Verfahren nach einem der vorhergehenden Ansprüche, **dadurch gekennzeichnet, dass** der Beginn des Verwurffensters (42) und/oder das Ende des Verwurffensters (42) und/oder der Beginn des Eintrefffensters (41) und/oder das Ende des Eintrefffensters (41) unter Verwendung eines Zeitgebers (68) bestimmt wird.

7. Verfahren nach Anspruch 6, **dadurch gekennzeichnet, dass** für jeden Anschluss einer Brücke (2, 3, 4, 5) ein separater Zeitgeber (68) definiert wird.

8. Weiche (60) innerhalb einer Brücke (2, 3, 4, 5) in einem Ethernet-basierten Netz (20) in einem Fahrzeug, wobei die Brücke (2, 3, 4, 5) zum Übertragen TAS-basierter Rahmen (F1, F2, F3, F4) konfiguriert ist, **dadurch gekennzeichnet, dass** die Weiche Mittel zum Ausführen eines Verfahrens nach einem der Ansprüche 1 bis 7 umfasst.

9. Brücke (2, 3, 4, 5) in einem Ethernet-basierten Netz (20) in einem Fahrzeug, wobei die Brücke (2, 3, 4, 5) zum Übertragen TAS-basierter Rahmen (F1, F2, F3, F4) konfiguriert ist, **dadurch gekennzeichnet, dass** die Brücke eine nach Anspruch 8 konfigurierte Weiche (60) umfasst.

10. Ethernet-basiertes Netz (20) in einem Fahrzeug, wobei das Netz (20) mindestens eine Brücke (2, 3, 4, 5) umfasst, die nach Anspruch 9 konfiguriert ist.

11. Computerlesbares Medium, umfassend auf einem Computer ausführbare Anweisungen zum Durchführen des Verfahrens nach einem der Ansprüche 1 bis 7.

## Revendications

1. Procédé de commutation de trames ordonnancées entrantes dans un réseau embarqué Ethernet (20), le réseau (20) comportant au moins un pont (2, 3, 4, 5) configuré pour transmettre des trames (F1, F2, F3, F4) basées sur une mise en forme de trafic sensible au temps, TAS, **caractérisé en ce qu'**une fenêtre (44) d'arrivée pour des trames (F1, F2, F3, F4) arrivées au niveau d'un port d'entrée parmi le ou les ponts (2, 3, 4, 5) est définie comme étant un intervalle (44) de temps où toutes les trames ordonnancées (F1, F2, F3) qui arrivent au cours de cet intervalle (44) de temps au niveau du port d'entrée parmi le ou les ponts (2, 3, 4, 5) sont acceptées et réacheminées par le ou les ponts (2, 3, 4, 5), et **en ce qu'**une fenêtre (42) d'abandon est comme étant un intervalle (45) de temps où toutes les trames ordonnancées (F1, F2, F3) reçues au niveau du port d'entrée parmi le ou les ponts (2, 3, 4, 5) au cours de cet intervalle (45) de temps sont abandonnées, le procédé comportant au moins les étapes suivantes :
- faire vérifier par le ou les ponts (2, 3, 4, 5), si une trame ordonnancée entrante (F1, F2, F3, F4) arrive au niveau du port d'entrée parmi le ou les ponts (2, 3, 4, 5) à l'intérieur de la fenêtre (42) d'abandon ou de la fenêtre (44) d'arrivée ;
- abandonner la trame (F1, F2, F3, F4) si elle est arrivée au niveau du port d'entrée parmi le ou les ponts (2, 3, 4, 5) à l'intérieur de la fenêtre (42) d'abandon ; et
- réacheminer la trame (F1, F2, F3, F4) si elle est arrivée au niveau du port d'entrée parmi le ou les ponts (2, 3, 4, 5) à l'intérieur de la fenêtre (44) d'arrivée.

2. Procédé selon la revendication de claim 1, le ou les ponts (2, 3, 4, 5) utilisant une bande (16) de garde pour déterminer l'instant où une trame (F1, F2, F3, F4) basée sur la TAS doit être émise ou transmise, **caractérisé en ce que** la fenêtre (42) d'abandon et/ou une fenêtre (41) d'arrivée est définie par rapport à la bande (16) de garde.

3. Procédé selon la revendication 2, un écart maximal entre l'heure d'une horloge interne d'un dispositif (1) et une heure de référence au sein du réseau (20) étant de +/-α, **caractérisé en ce que** la longueur de l'intervalle (45) de temps de la fenêtre (42) d'abandon est inférieure à T-2α, 1/T étant la fréquence de la bande (16) de garde.

4. Procédé selon la revendication 2 ou 3, un écart maximal entre l'heure d'une horloge interne d'un dispositif (1) et une heure de référence au sein du réseau (20) étant de +/-α, **caractérisé en ce que** des trames (F1, F2, F3, F4) arrivant à l'intérieur d'une fenêtre (41) d'arrivée sont en outre transmises, la longueur de l'intervalle (44) de temps de la fenêtre (41) d'arrivée étant supérieure ou égale à 2α, 1/T étant la fréquence de la bande (16) de garde.

5. Procédé selon la revendication 2 ou 4, un écart maximal entre l'heure d'une horloge interne d'un dispositif (1) et une heure de référence au sein du réseau (20) étant de +/-α, **caractérisé en ce que** la longueur de la fenêtre (42) d'abandon est de T-2α-*marge,* et/ou **en ce que** la longueur de la fenêtre (41) d'arrivée est de 2α+*marge,* où *marge* est une valeur supérieure ou égale à zéro.

6. Procédé selon l'une quelconque des revendications précédentes, **caractérisé en ce que** le début de la fenêtre (42) d'abandon et/ou la fin de la fenêtre (42) d'abandon et/ou le début de la fenêtre (41) d'arrivée et/ou la fin de la fenêtre (41) d'arrivée sont déterminés à l'aide d'un temporisateur (68).

7. Procédé selon la revendication 6, **caractérisé en ce qu'**un temporisateur (68) distinct est défini pour chaque port d'un pont (2, 3, 4, 5).

8. Commutateur (60) au sein d'un pont (2, 3, 4, 5) dans un réseau embarqué Ethernet (20), le pont (2, 3, 4, 5) étant configuré pour transmettre des trames (F1, F2, F3, F4) basées sur une TAS, **caractérisé en ce que** le commutateur comporte un moyen servant à exécuter un procédé selon l'une quelconque des revendications 1 à 7.

9. Pont (2, 3, 4, 5) dans un réseau embarqué Ethernet (20), le pont (2, 3, 4, 5) étant configuré pour transmettre des trames (F1, F2, F3, F4) basées sur une TAS, **caractérisé en ce que** le pont comporte un commutateur (60) configuré selon la revendication 8.

10. Réseau embarqué Ethernet (20), le réseau (20) comportant au moins un pont (2, 3, 4, 5) qui est configuré selon la revendication 9.

11. Support lisible par ordinateur comportant des instructions exécutables par ordinateur pour réaliser le procédé selon l'une quelconque des revendications 1 à 7.
